# EUROPEAN PATENT APPLICATION

(11) **EP 4 679 274 A2**
(43) Date of publication of application: **14.01.2026**
(21) Application number: 25182584.0
(22) Date of filing: 13.06.2025
(51) Int. Cl.: G06F 11/07, G05B 19/05

(54) **CONTROL DEVICE AND CONTROL METHOD**

(30) Priority: 19.06.2024 JP 2024099021
(71) Applicant: Yokogawa Electric Corporation, Tokyo 180-8750 (JP)
(72) Inventor: SAKURAI, Yuusuke, Musashino-shi, Tokyo 180-8750 (JP); ATSUMARI, Yusuke, Musashino-shi, Tokyo 180-8750 (JP)
(74) Representative: Winter, Brandl - Partnerschaft mbB

(57) **Abstract**

A control device (100) according to the present disclosure includes a processor (102) hat executes software, and a circuit device (101) that detects abnormality, and, when the circuit device (101) detects the abnormality, the circuit device (101) suppresses an abnormality notification to the software, and stores error information related to the abnormality in a storage device (103).

## Description

### FIELD

The present disclosure relates to a control device and a control method.

### BACKGROUND

As a device (also referred to as a module or a control device) that is used for process automation (PA) or factory automation (FA), various devices, such as a field device, a controller that controls the field device, and a monitoring device that monitors a state of the field device or the entire of a plant including the field device, are used.

This type of device (module) has mounted thereon a self-check function that is a mechanism constituted such that, in a case where a module detects abnormality, a field programmable gate array (FPGA) or an application specific integrated circuit (ASIC) notifies software of the abnormality and saves, in an external non-volatile memory, error information that has been stored in a register group included in hardware.

Specifically, when the FPGA or the ASIC (also referred to as hardware) detects the abnormality, the FPGA or the ASIC notifies a processor of the abnormality and saves the hardware log in an external non-volatile memory provided for the processor (or the FPGA or the ASIC) after the processor has acquired the error information (a hardware log) related to the abnormality from the hardware.

Patent Document 1: Japanese Laid-open Patent Publication No. 2005-70936
However, in the above described control device, it takes time to save the log at the time of abnormality detection. Specifically, many processes need to be performed before the error information is saved in the non-volatile memory, and it takes a long time to save the error information in the non-volatile memory after the abnormality detection.

Accordingly, the present disclosure has been conceived in light of the circumstances described above and an object thereof is to reduce time needed to save a log at the time of abnormality detection.

### SUMMARY

According to an aspect of an embodiment, a control device includes a processor that executes software, and a circuit device that detects abnormality, wherein when the circuit device detects the abnormality, the circuit device suppresses an abnormality notification to the software, and stores error information related to the abnormality in a storage device.

### BRIEF DESCRIPTION OF THE DRAWINGS

FIG. 1 is a diagram illustrating a configuration of a conventional control device;
FIG. 2 is a diagram illustrating an outline of an operation of a control device according to an embodiment;
FIG. 3 is a diagram illustrating a configuration of a control device according to a first embodiment;
FIG. 4 is a flowchart illustrating an operation of the control device according to the first embodiment;
FIG. 5 is a diagram illustrating an error information saving circuit included in a control device according to a second embodiment;
FIG. 6 is a diagram illustrating a configuration of a control device according to a third embodiment;
FIG. 7 is a diagram illustrating a relationship among a register, an RTC, and a non-volatile memory included in a circuit in the control device according to the third embodiment;
FIG. 8 is a flowchart illustrating an operation of the control device according to the third embodiment;
FIG. 9 is a diagram illustrating a configuration of a control device according to a fourth embodiment;
FIG. 10 is a diagram illustrating one example in which a checksum is added, as an error detection code, to error information on the control device according to the fourth embodiment; and
FIG. 11 is a flowchart illustrating an operation of the control device according to the fourth embodiment.

### DESCRIPTION OF EMBODIMENTS

In the following, preferred embodiments of the present disclosure will be explained in detail below with reference to the accompanying drawings. In the present application and drawings, by assigning the same reference numerals to the same or equivalent components having substantially the same functional configuration, overlapping descriptions thereof will be appropriately omitted.

### (1. First Embodiment)

### (1.1. Outline)

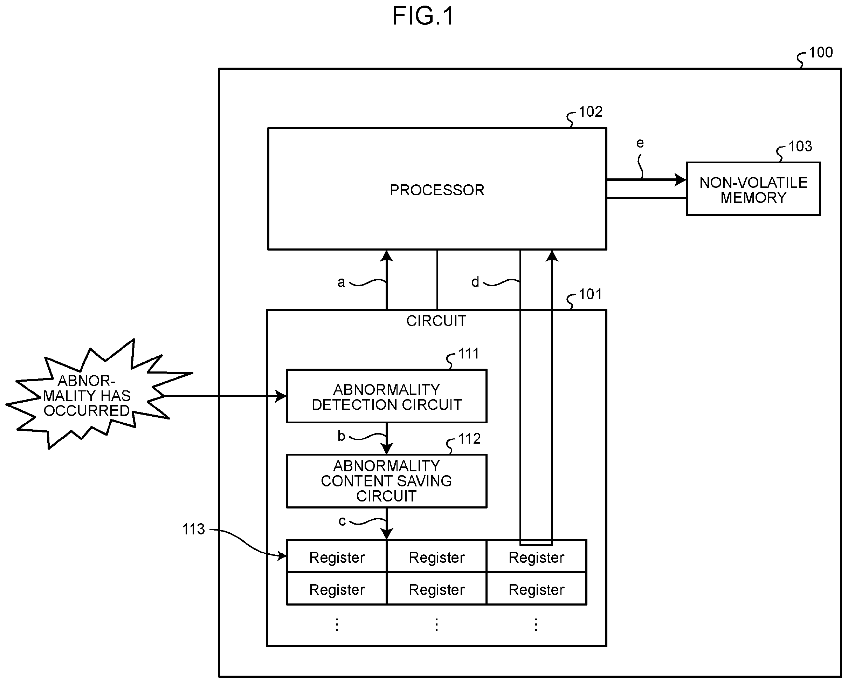

FIG. 1 is a diagram illustrating a configuration of a control device 100 that is conventionally used. In a case where abnormality has occurred in the control device 100, the control device 100 saves, in an error information saving circuit 113, error information (for example, an abnormal value of a voltage, etc.) that indicates the content of the abnormality that has occurred in the control device 100. Then, a processor 102 in the control device 100 reads out the error information saved in the error information saving circuit 113, and saves an error information in the non-volatile memory 103. The error information saved in the non-volatile memory 103 is used to examine the cause of the abnormality later.

In FIG. 1, as an example, the control device 100 is provided in a plant. As illustrated in FIG. 1, the control device 100 includes a circuit 101 and the processor 102. Furthermore, the control device 100 includes the non-volatile memory 103.

The circuit 101 is a FPGA or an ASIC. The FPGA is a device of programmable integrated logic circuits (gates) of which configuration can be programmed by a designer in a site (field). The FPGA is referred to as a programmable FPGA because an internal circuit configuration, that is, processing details of the device can be rewritten by the program, as compared to a large-scale integrated circuit (integrated circuit) in which a circuit configuration is not able to be changed after being manufactured. Programmable mentioned here indicates that a user is able to change and automate an operation of a module, software, a system, and the like as needed. The ASIC is an application specific IC, that is, a dedicated custom IC, that is manufactured by focusing on an intended use purpose or an end product that is to be used. The name of ASIC is not derived from an internal configuration of the device, but is derived from a use purpose. The ASIC can be customized as a device in which a microcomputer, a DSP, a GPU, a memory, a dedicated circuit, or the like are built in in accordance with the use purpose.

When abnormality has occurred in the control device 100, an abnormality detection circuit 111 included in the circuit 101 detects the abnormality, and notifies the processor 102 of an abnormality detection signal that reports detection of the abnormality (Step a). Furthermore, in a case where the abnormality detection circuit 111 detects the abnormality that has occurred in the control device 100 (Step b), the abnormality content saving circuit 112 saves error information that indicates the content of a failure of the control device 100 in terms of hardware in the error information saving circuit 113 that includes a plurality of registers (Step c).

The processor 102 manages the overall control of the control device 100. In a case where the processor 102 receives the abnormality detection signal from the abnormality detection circuit 111 included in the circuit 101, the processor 102 reads out the error information that is saved in the register included in the error information saving circuit 113 by using software (Step d). Then, the processor 102 stores the readout error information in the non-volatile memory 103 (Step e).

The abnormality of the control device 100 corresponds to, for example, abnormality of a main power supply voltage of the control device 100 (abnormality of an external power supply that supplies a voltage to a module), a stoppage of software in a processor, abnormality of an external temperature (an external temperature is high or low), or the like.

Moreover, hereinafter, "error information that has been stored in the register in the error information saving circuit" may be sometimes referred to as a "hardware log".

In the control device 100 that is conventionally used, specifically, the following improvement points are present.
(a): Software acquires the error information from a register group included in the error information saving circuit 113 that is hardware, and saves the acquired information in the external non-volatile memory, so that many processes need to be performed before the error information is saved, and thus, a long time is needed to save the error information after the abnormality detection.
(b): In a process performed by software, a process of a peripheral device/driver is needed at the time of access to the non-volatile memory. Therefore, in the control device 100 that is conventionally used, a processing speed of hardware included in the non-volatile memory is not sufficiently used, and it takes time to perform a saving process.
(c): The time needed to save the error information depends on the processing speed of the software, so that the time needed to save the error information varies each time.
(d): In a case where complex abnormalities have occurred in series, the process is performed by way of software, so that it is not possible to perform a saving process by transmitting a plurality of pieces of error information on the occurred errors to an external non-volatile memory for each log. Accordingly, it is not possible to specify the root cause of the error, which constitutes an obstacle to analyze the error information.

As a specific problem caused by the above items (a), (b), and (c), a case in which, for example, an operation of the control device 100 is stopped caused by a decrease in the main power supply voltage of the module due to transient abnormality or live wire removal of the power supply line is conceived. In this case, the control device 100 needs time to save the error information, so that the cause of the stoppage of the module is not able to be found.

Furthermore, as a specific problem caused by the item of (d), in a case where different abnormality corresponding to an error factor has occurred in the middle of saving the error information, the error information may possibly be overwritten. In this case, the content of the error information lacks consistency, and it is thus difficult to analyze the error information.

In other words, in the control device 100 the is conventionally used, the processor 102 (software) acquires the error information and saves the acquired error information in the non-volatile memory 103 at the time of abnormality detection of the control device 100, so that there is a problem in that it takes a long time to save the error information after the occurrence of the abnormality in the control device 100.

Accordingly, the control device according to the present disclosure promptly and accurately saves the error information that indicates the content of abnormality of the control device 100.

In the following, the outline of the control device according to the embodiment will be described. Many PA and FA devices each have a self-check function, and, in most cases, stores the error information (a hardware log) in a register group corresponding to hardware at the time of abnormality detection. The control device 100 having the conventional self-check function saves the error information in an external non-volatile memory by a processor, or the like.

The control device according to the embodiment implements this function in the hardware. As a result of this, the control device according to the embodiment is able to save the error information at high speed, and also, at the same speed without depending on the operation of the software.

Furthermore, even in a case where a plurality of events that become error factors have continuously occurred, the control device according to the embodiment securely saves all of the pieces of error information in the non-volatile memory by utilizing a buffer provided in the hardware.

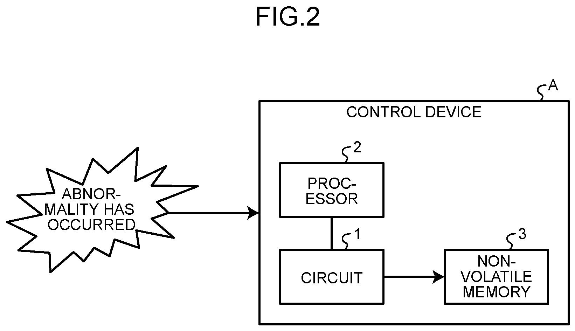

FIG. 2 is a diagram illustrating the outline of an operation of a control device A according to the embodiment. FIG. 2 indicates a case in which abnormality has occurred in the control device A.

The control device A includes a circuit 1, a processor 2, and a non-volatile memory 3. The circuit 1 is a FPGA or an ASIC. The processor 2 manages the overall control of the control device A. Furthermore, the non-volatile memory 3 may be provided in the outside of the control device A. In a case where abnormality has occurred in the control device A, the circuit 1 stores error information that indicates the content of the occurrence of the abnormality in the non-volatile memory 3 by using hardware without by way of the software, without notifying the processor 2 of the occurrence of the abnormality. Moreover, the control device A is not limited to be provided in a plant, but is able to be provided in a device disposed outside the plant.

Therefore, according to the control device A according to the embodiment, the circuit 1 is able to store the error information on the control device A in the non-volatile memory 3 by using the hardware without by way of the software, so that the control device A according to the embodiment is able to promptly and accurately save the content of the abnormality of the control device A.

Moreover, the control device A according to the embodiment is able to be used for the self-check function that is provided in a device and that is used in the PA or FA.

### (1.2. Configuration)

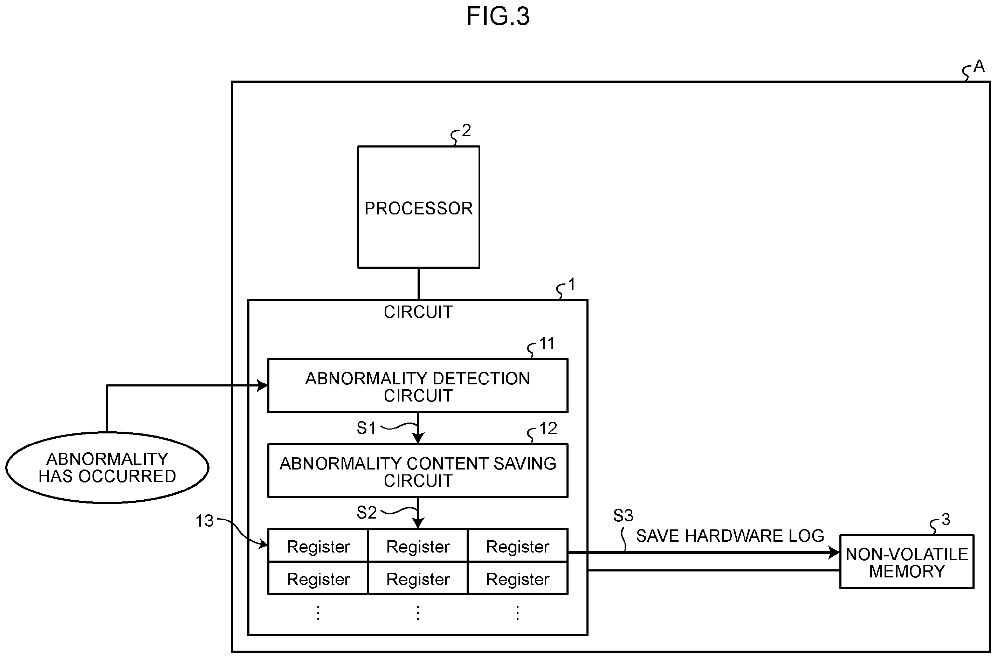

In the following, a specific configuration of the control device A according to the first embodiment will be described. FIG. 3 is a diagram illustrating a configuration of the control device A according to the first embodiment. As illustrated in FIG. 3, the control device A includes the circuit 1, the processor 2, and the non-volatile memory 3.

### (Circuit 1)

The circuit 1 is one example of a circuit device that is connected to each of the processor 2 and the non-volatile memory 3. The circuit 1 is a FPGA or an ASIC. The processor 2 manages the overall control of the control device A. The circuit 1 includes an abnormality detection circuit 11, an abnormality content saving circuit 12, and an error information saving circuit 13.

### (Abnormality detection circuit 11)

The abnormality detection circuit 11 is a circuit that detects abnormality that has occurred in the control device A. The abnormality detection circuit 11 may be connected to the abnormality content saving circuit 12. Furthermore, in a case where the abnormality detection circuit 11 detects the abnormality, the abnormality detection circuit 11 suppresses an abnormality notification to the software (processor).

### (Abnormality content saving circuit 12)

In a case where the abnormality has been detected by the abnormality detection circuit 11, the abnormality content saving circuit 12 stores the error information that indicates the content of the abnormality of the control device A in the error information saving circuit 13.

### (Error information saving circuit 13)

The error information saving circuit 13 includes a plurality of registers (a register group). The error information saving circuit 13 saves the error information stored in the plurality of registers in the non-volatile memory 3 by using the hardware without by way of the software. The error information stored in the non-volatile memory 3 includes the history of all of the pieces of error information that have been stored in the error information saving circuit 13.

### (1.3. Operation)

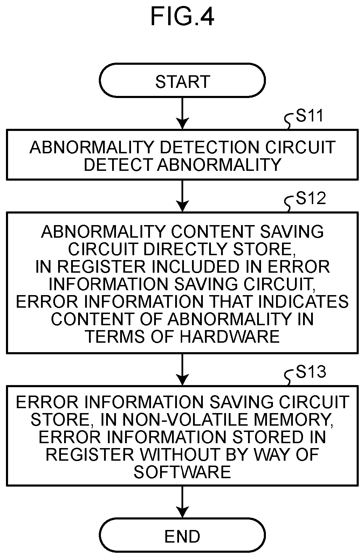

In the following, an operation of the control device A illustrated in FIG. 3 will be described. FIG. 4 is a flowchart illustrating the operation of the control device A according to the first embodiment. In the description below, an operation of the control device A will be described with reference to FIG. 3 and FIG. 4.

When the abnormality detection circuit 11 included in the control device A detects abnormality of the control device A (Step S11), the abnormality detection circuit 11 notifies the abnormality content saving circuit 12 that the abnormality has been detected (Step S1 in FIG. 3).

The abnormality content saving circuit 12 directly stores the error information that indicates the content of the abnormality of the control device A in the register included in the error information saving circuit 13 in terms of hardware (Step S12, and Step S2 in FIG. 3).

Then, the error information saving circuit 13 stores the saved error information in the non-volatile memory 3 by using the hardware without by way of the software (Step S13, and Step S3 in FIG. 3). In other words, the software is not involved in saving the error information.

### (1.4. Effects)

The control device A according to the first embodiment suppresses a notification of the abnormality to the processor 2, and automatically saves the error information without by using the software, so that the control device A according to the first embodiment is able to reduce the time needed to save the error information in the non-volatile memory 3 after the abnormality detection of the control device A.

Therefore, even in a case there is no time left to save the error information in the non-volatile memory 3 (for example, transient abnormality or live wire removal of the power supply line, etc.), the control device A according to the first embodiment is able to securely acquire the error factor of the CPU module.

Furthermore, the control device A according to the first embodiment saves the error information in the non-volatile memory 3 without depending on the process performed by the software, so that the control device A according to the first embodiment is able to keep the time needed to save the error information constant.

In addition, in the control device A according to the first embodiment, the saving process of the error information is completed by the hardware, so that the process of acquiring the error information performed by the software becomes unnecessary, and thus, the time needed to save the error information after the abnormality has been detected is reduced.

Furthermore, in the control device A according to the first embodiment, even if the software is running when abnormality has occurred, the control device A according to the first embodiment is able to save the error information at high speed and always in the same period of time.

In addition, in the control device A according to the first embodiment, even if the software stops due to a failure of the processor 2, the control device A according to the first embodiment is able to save the error information.

### (2. Second Embodiment)

In the following, a control device A' according to a second embodiment will be described. The control device A' according to the second embodiment is different from the control device A according to the first embodiment in that a configuration of the error information saving circuit 13 is different.

### (2.1. Configuration)

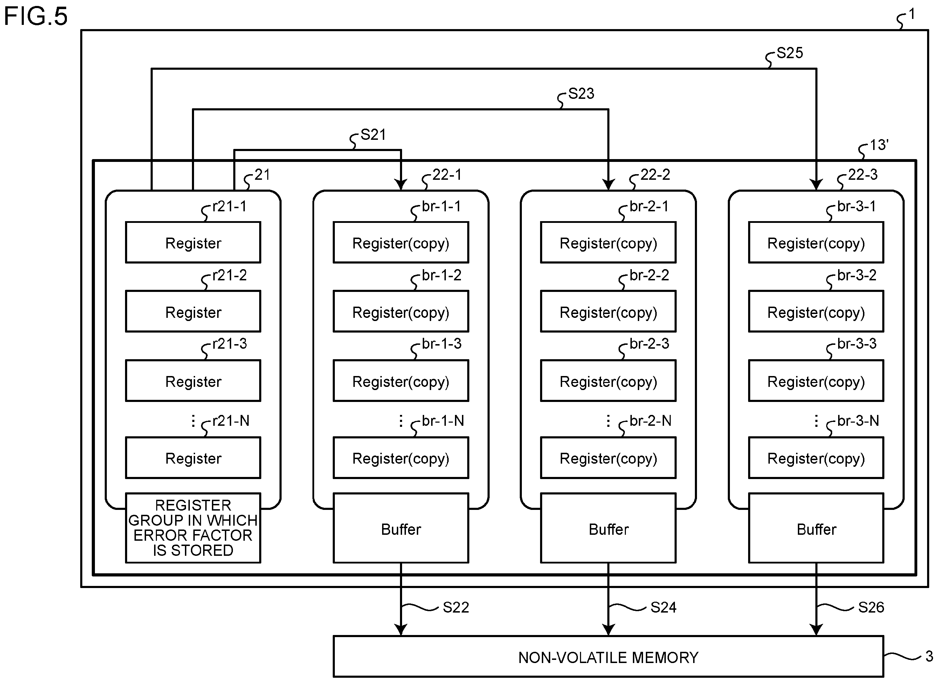

FIG. 5 is a diagram illustrating an error information saving circuit 13' included in the control device A' according to the second embodiment. As illustrated in FIG. 5, the error information saving circuit 13' includes a register group 21 and buffers 22-1 to 22-3.

The register group 21 includes a plurality of registers r21-1 to r21-N. In the registers r21-1 to r21-N, the error information that indicates the content of the detected abnormality of the control device A' is saved first.

The buffer 22-1 includes a plurality of registers br-1-1 to br-1-N. The buffer 22-2 includes a plurality of registers br-2-1 to br-2-N. The buffer 22-3 includes a plurality of registers br-3-1 to br-3-N. The error information stored in each of the plurality of registers r21-1 to r21-N is sequentially copied to the plurality of the registers br-1-1 to br-1-N, br-2-1 to br-2-N, and br-3-1 to br-3-N. Then, the error information stored in the buffers 22-1 to 22-3 is sequentially stored in the non-volatile memory 3 without by way of the software. In other words, in the non-volatile memory 3, the history of the error information stored in the buffers 22-1 to 22-3 is saved.

### (2.2. Operation)

In the following, an operation of saving, in the non-volatile memory 3, the error information stored in the error information saving circuit 13' according to the second embodiment will be described with reference to FIG. 5. In the error information saving circuit 13' illustrated in FIG. 5, in a case where abnormality of the control device A' has occurred, the error information that is stored in the registers r21-1 to r21-N included in the register group 21 is copied to the respective registers br-1-1 to br-1-N that are included in the buffer 22-1 (Step S21). Then, the content of the registers br-1-1 to br-1-N included in the buffer 22-1 is saved in the non-volatile memory 3 (Step S22).

After that, in a case where a different error factor has occurred, the same process as that performed by the buffer 22-1 is performed in the buffer 22-2 and the buffer 22-3. In other words, in a case a different error factor has occurred, the error information that is stored in the registers r21-1 to r21-N included in the register group 21 is copied to the respective registers br-2-1 to br-2-N included in the buffer 22-2 (Step S23). Then, the error information that is stored in the registers br-2-1 to br-2-N included in the buffer 22-2 is saved in the non-volatile memory 3 (Step S24).

In addition, after that, in a case where another different error factor has occurred, the error information that is stored in the registers r21-1 to r21-N included in the register group 21 is copied to the respective registers br-3-1 to br-3-N included in the buffer 22-3 (Step S25). Then, the error information that is stored in the registers br-3-1 to br-3-N included in the buffer 22-3 is saved in the non-volatile memory 3 (Step S26).

In addition, after that, in a case where still another different error factor has occurred, the processes performed at Step S21 to Step S26 are sequentially repeated. Moreover, the number of the buffers 22, and the order in which the error information is transferred from the register group 21 to each of the buffers 22-1 to 22-3 are not limited to the number of the buffers 22 and the order illustrated in FIG. 5.

### (2.3. Effects)

The error information saving circuit 13' illustrated in FIG. 5 includes the buffers 22-1 to 22-3 that temporarily save the error information. The error information saving circuit 13' includes the buffers 22-1 to 22-3, so that, even in a case where a plurality of error factors continuously occur in the middle of saving the error information, unlike the first embodiment, the error information saving circuit 13' is able to save each of the pieces of error information in the different buffers 21-1 to 21-3. Therefore, the error information saving circuit 13' is able to save all of the pieces of error information for each log in the non-volatile memory 3 without leaving anything behind.

### (3. Third Embodiment)

A control device A" according to a third embodiment is different from the control device A according to the first embodiment or the control device A' according to the second embodiment in that an operation of an error information saving circuit 34 is different from the operation of each of the control device A and the control device A' and an RTC information storage circuit 30 is provided. By using such a different configuration, the control device A" according to the third embodiment saves an error factor that is useful for an error analysis and that is included in clock time information and error information in the non-volatile memory 3, and is able to securely save the error factor even when a data size of the error information is large.

### (3.1. Configuration)

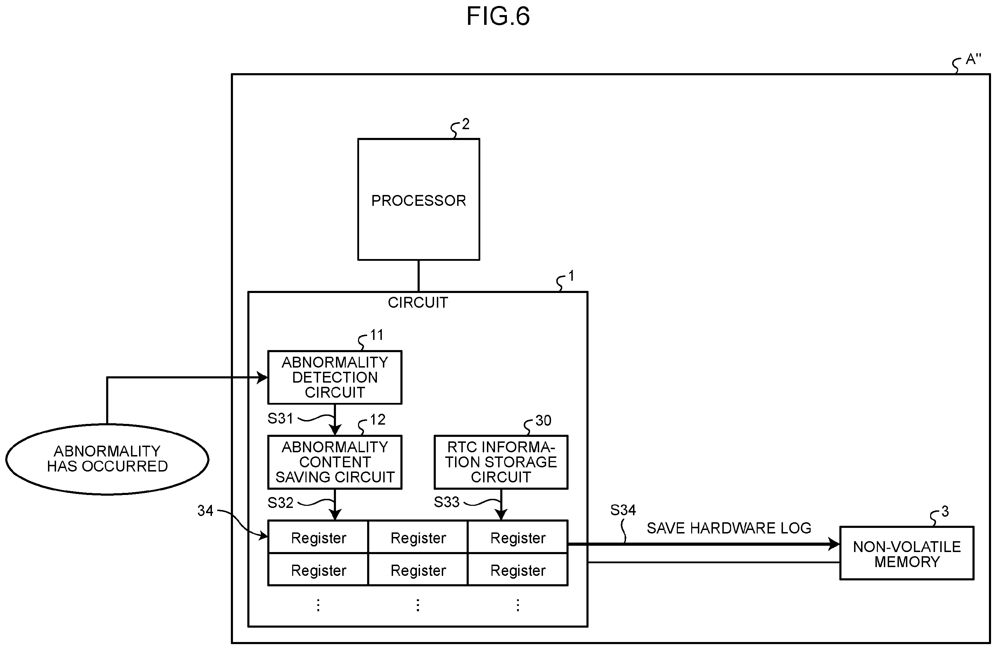

A specific configuration of the control device A" according to the third embodiment will be described. FIG. 6 is a diagram illustrating the configuration of the control device A" according to the third embodiment. Moreover, a description will be given by assigning the same reference numerals to components having the same configuration illustrated in FIG. 3. As illustrated in FIG. 6, the circuit 1 included in the control device A" according to the third embodiment includes the RTC information storage circuit 30 and the error information saving circuit 34.

The RTC information storage circuit 30 acquires, from a Real Time Clock (RTC) provided outside of the circuit 1, clock time information indicating a clock time at which abnormality of the control device A" is detected, and saves the acquired clock time information in the register included in the error information saving circuit 13. The error information saving circuit 34 sorts out the error factor information that indicates an error factor from the error information, and saves the sorted error factor information in the non-volatile memory 3. Moreover, the RTC may be provided in the circuit 1. For example, the error factor information is extracted in a case where abnormality, from among abnormality of the detection targets, caused by a specific factor with limited time left corresponding to a limited period of time for save time in which the error information is able to be saved is less than a threshold due to a stoppage of the control device A" is detected.

The error information saving circuit 34 includes a plurality of registers (a register group). Furthermore, the error information saving circuit 34 sorts out the error factor information that indicates the error factor from the pieces of error information stored in the plurality of registers. Then, the error information saving circuit 34 saves the clock time information acquired by the RTC information storage circuit 30 and the sorted error factor information in the non-volatile memory 3 by using the hardware without by way of the software.
The history of all of the pieces of error information stored in the error information saving circuit 34 is saved in the error information stored in the non-volatile memory 3.

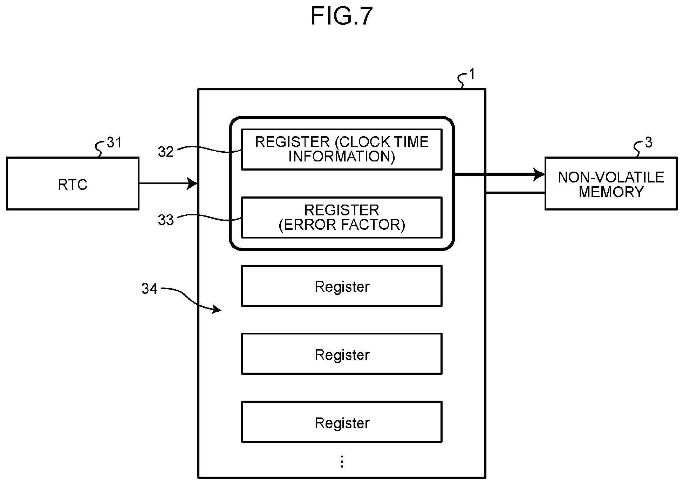

FIG. 7 is a diagram illustrating a relationship among the register included in the circuit 1 in the control device A" according to the third embodiment, an RTC 31, and the non-volatile memory 3. As illustrated in FIG. 7, the register included in the error information saving circuit 34 in the circuit 1 in the control device A" according to the third embodiment incudes register for clock time information 32 and a register for error factor 33.

The register for clock time information 32 is a register that saves the clock time information indicating a clock time at which abnormality of the control device A" acquired by the RTC information storage circuit 30 is detected. The register for error factor 33 is a register that saves the error factor information indicating the error factor that has been sorted out from the error information by the error information saving circuit 34.

The error information saving circuit 34 included in the circuit 1 according to the third embodiment saves, instead of all of the pieces of error information, the error factor information that has been sorted out from the error information and the clock time information in the non-volatile memory 3.

### (3.2. Operation)

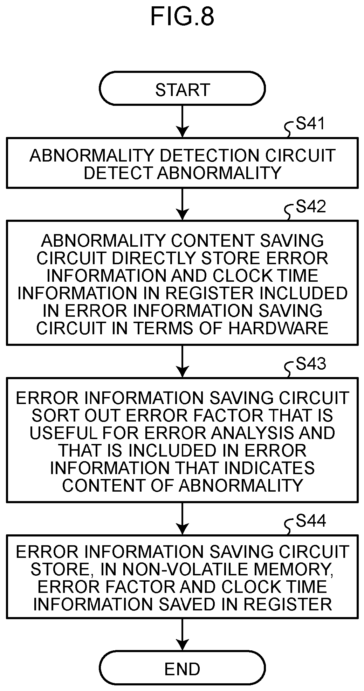

In the following, an operation of the control device A" illustrated in FIG. 6 will be described. FIG. 8 is a flowchart illustrating an operation of the control device A" according to the third embodiment. In a description below, the operation of the control device A" will be described with reference to FIG. 8.

When the abnormality detection circuit 11 included in the control device A" detects abnormality of the control device A" (Step S41), the abnormality detection circuit 11 notifies the abnormality content saving circuit 12 that the abnormality has been detected.

If the abnormality of the control device A" has been detected by the abnormality detection circuit 11, the abnormality content saving circuit 12 directly stores the error information that indicates the content of the abnormality of the control device A" in the register included in the error information saving circuit 34 in terms of hardware (Step S42).

Then, the error information saving circuit 34 sorts out an error factor that is useful for an error analysis and that is included in the error information that indicates the content of the abnormality of the control device A" (Step S43). Then, the error information saving circuit 34 saves the error factor and the clock time information that have been saved in the register in the non-volatile memory 3 without by way of the software (Step S44).

Moreover, the error information saving circuit 34 may include a plurality of buffers, as in the case of the error information saving circuit 13' according to the second embodiment illustrated in FIG. 5. In this case, the error factor and the clock time information stored in the register included in the error information saving circuit 34 is saved in the register included in one of the buffers, and the error factor and the clock time information saved in the buffer is saved in the non-volatile memory 3 without by way of the software.

### (3.3. Effects)

In a case where the control device A" according to the third embodiment detects the error factor related to the error information with a large data size and with no time left (for example, transient abnormality of the power supply line), the control device A" sorts out the error factor that is usable for an error analysis from the error information, and saves the error factor and the clock time information in the non-volatile memory 3.

As a result of this, the control device A" according to the third embodiment is able to reduce the data size of the error information, and is thus able to securely save the error factor regardless of the data size of the error information.

Furthermore, the control device A" according to the third embodiment saves the clock time information indicating a clock time at which the error has occurred, and is thus able to find out the error factor in time series at the time of a failure analysis of the module.

### (4. Fourth Embodiment)

A control device A‴ according to a fourth embodiment is different from the control device A according to the first embodiment to the control device A" according to the third embodiment in that a different operation is performed in an error information saving circuit 42 included in the control device A‴ and an error detection code adding circuit 41 is provided. By using such a different configuration, the control device A‴ according to the fourth embodiment adds an error detection code to the error information, and stores the error information in the non-volatile memory 3. Therefore, similarly to the control device A" according to the third embodiment, the control device A‴ according to the fourth embodiment securely saves the error factor in a case where the data size of the error information is large.

### (4.1. Configuration)

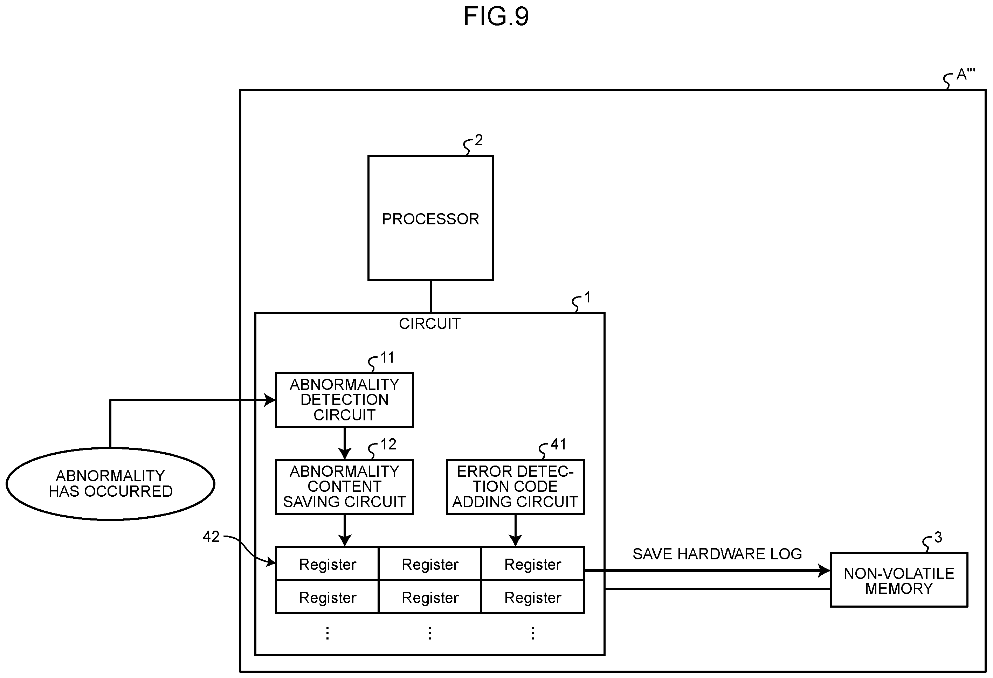

A specific configuration of the control device A‴ according to the fourth embodiment will be described. FIG. 9 is a diagram illustrating the configuration of the control device A‴ according to the fourth embodiment. Moreover, a description will be given by assigning the same reference numerals to components having the same configuration illustrated in FIG. 3. As illustrated in FIG. 9, the circuit 1 included in the control device A‴ according to the fourth embodiment includes the error detection code adding circuit 41 and the error information saving circuit 42.

The error detection code adding circuit 41 obtains an error detection code for each address of the register included in the error information saving circuit 42 within a predetermined range, and stores the obtained error detection code in the register included in the error information saving circuit 42. Here, the error detection code is, for example, a checksum, a cyclic redundancy code (CRC), an error correction code (ECC: error-correcting code), or the like.

The error information saving circuit 42 saves the error information stored in the register included in the error information saving circuit 42 and the error detection code obtained by the error detection code adding circuit 41 in the non-volatile memory 3.

### (One example of adding error detection code)

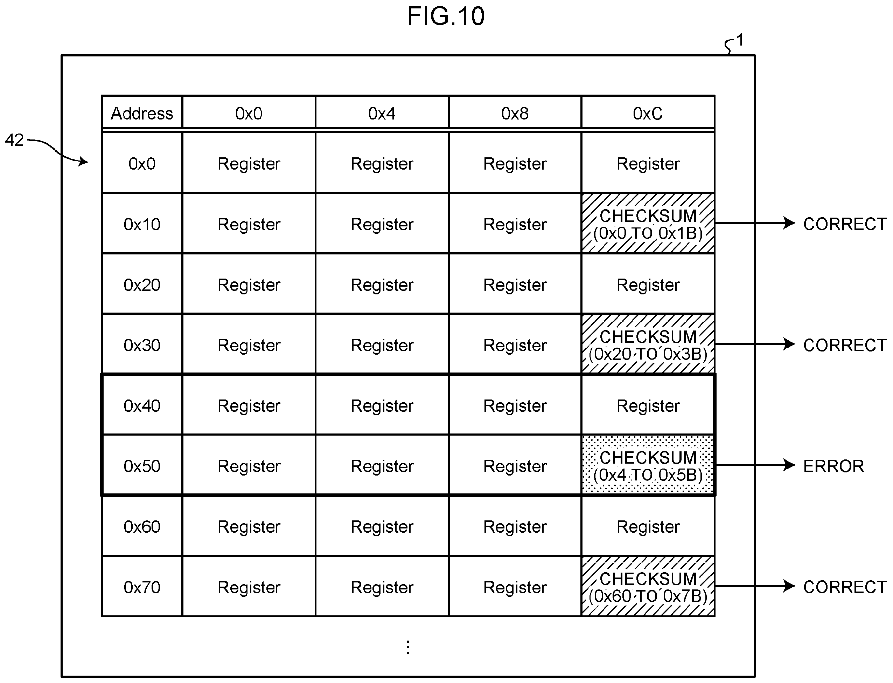

FIG. 10 is a diagram of one example in which a checksum is added, as an error detection code, to the error information on the control device A‴ according to the fourth embodiment. As illustrated in FIG. 10, a checksum is added, for each 0x20, to the address of the register included in the error information saving circuit 42.

Specifically, checksums are added to the addresses indicated by 0x0 to 0x1B, 0x20 to 0x3B, 0x4 to 0x5B, and 0x60 to 0x7B. The checksums added to the addresses indicated by 0x0 to 0x1B, 0x20 to 0x3B, and 0x60 to 0x7B are consistent (correct). In the checksum added to the address indicated by 0x4 to 0x5B, an error is detected.

### (4.2. Operation)

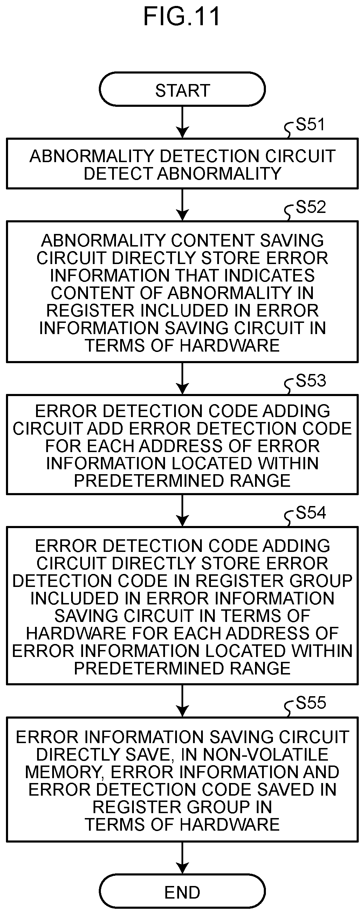

Then, an operation of the control device A‴ illustrated in FIG. 9 will be described. FIG. 11 is a flowchart illustrating the operation of the control device A‴ according to the fourth embodiment. In the following, the operation of the control device A‴ will be described with reference to FIG. 11.

When the abnormality detection circuit 11 included in the control device A‴ detects abnormality of the control device A‴ (Step S51), the abnormality detection circuit 11 notifies the abnormality content saving circuit 12 that the abnormality has been detected.

The abnormality content saving circuit 12 directly stores the error information that indicates the content of the abnormality of the control device A‴ in the register included in the error information saving circuit 34 in terms of hardware (Step S52).

Then, the error detection code adding circuit 41 adds an error detection code for each address of the error information located within the predetermined range (Step S53). Then, the error detection code adding circuit 41 directly stores the error detection code in the register included in the error information saving circuit 42 in terms of hardware for each address of the error information located within the predetermined range (Step S54).

Then, the error information saving circuit 42 directly saves the error information and the error detection code saved in the register in the non-volatile memory 3 in terms of hardware (Step S55).

Moreover, the error information saving circuit 42 may include a plurality of buffers, as in the case of the error information saving circuit 13' according to the second embodiment illustrated in FIG. 5. In this case, the error information and the error detection code stored in the register included in the error information saving circuit 42 is saved in the register included in one of the buffers, and the error information and the error detection code saved in the buffer is saved in the non-volatile memory 3 without by way of the software.

### (4.3. Effects)

Therefore, the control device A‴ according to the fourth embodiment adds the error detection code that is used to check consistency of data related to the error information stored in each of a certain address area. Then, the control device A‴ according to the fourth embodiment adds the error detection code to the error information. As a result of this, the control device A‴ is able to check the reliability of data for each area located in the error information.

In a case where the control device A‴ according to the fourth embodiment detects the error factor related to the error information with a large data size and with no time left (for example, transient abnormality of the power supply line), there is a possibility that the conventional control device is not able to collect all of the pieces of error information.

However, the control device A‴ according to the fourth embodiment is able to ensure consistency of data for each area because a checksum is added to each of the predetermined areas, and is able to use only valid error information as information to be used for the error analysis.

The example illustrated in FIG. 10, an error is detected in the checksum that is added to the address indicated by 0x40 to 0x5B, so that the reliability of the data is not guaranteed. **In** contrast, the checksums that are added to the addresses indicated by 0x0 to 0x1B, 0x20 to 0x3B, and 0x60 to 0x7B is consistent, so that the error information in these areas is reliable.

The control device according to the present disclosure is able to reduce the time needed for a log save at the time of abnormality detection.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A control device (100) comprising:
a processor (102) that executes software; and
a circuit device (101) that detects abnormality, wherein
when the circuit device (101) detects the abnormality, the circuit device (101)
suppresses an abnormality notification to the software, and
stores error information related to the abnormality in a storage device (103).

2. The control device (100) according to claim 1, wherein the circuit device (101)
includes a register group (21) that includes a plurality of registers (br-1-1~br-1-N, br-2-1~br-2-N, br-3-1~br-3-N,) each storing therein the error information,
reads out the error information from the plurality of registers (br-1-1~br-1-N, br-2-1~br-2-N, br-3-1~br-3-N,) when the circuit device (101) detects the abnormality including abnormality of a main power supply voltage of the control device (100), a stoppage of the software, and abnormality of an external temperature of the control device (100), and
stores the read error information in the storage device.

3. The control device (100) according to claim 2, wherein the circuit device (101)
includes a buffer (22-1 to 22-3),
copies, to the buffer, copy information received from the register group (21) that includes the registers (br-1-1~br-1-N, br-2-1~br-2-N, br-3-1~br-3-N,) each storing therein the error information, and
reads out the error information from the copy information that is stored in the buffer and that is received from the register group (21), and stores the error information in the storage device.

4. The control device (100) according to claim 2, wherein the circuit device (101)
includes a plurality of buffers,
copies, to a first buffer, when first abnormality is detected in the register group (21), first copy information received from the register group (21) that includes the registers (br-1-1~br-1-N, br-2-1~br-2-N, br-3-1~br-3-N,) each storing therein first error information related to the first abnormality,
copies, to a second buffer, when second abnormality is detected in the register group (21) after the first abnormality is detected, second copy information received from the register group (21) that includes the registers (br-1-1~br-1-N, br-2-1~br-2-N, br-3-1-br-3-N,) each storing therein second error information related to the second abnormality,
reads out the first error information from the first copy information stored in the first buffer, and stores the first error information in the storage device, and
reads out the second error information from the second copy information stored in the second buffer, and stores the second error information in the storage device.

5. The control device (100) according to any one of claims 2-4, wherein the circuit device (101)
extracts, from the error information, error factor information related to a factor of the detected abnormality,
acquires the error factor information and clock time information indicating a clock time at which the abnormality specified by using a real time clock is detected, and
stores the error factor information and the clock time information in the storage device in an associated manner.

6. The control device (100) according to claim 5, wherein the circuit device (101) extracts the error factor information when the abnormality caused by a specific factor with limited time left for saving time is detected wherein the limited time left for saving time is less than a threshold in which the error information is able to be saved.

7. The control device (100) according to any one of claims 2-6, wherein the circuit device (101)
includes the registers (br-1-1~br-1-N, br-2-1~br-2-N, br-3-1~br-3-N,) each storing therein the error information,
calculates, for each predetermined address area in the register, an error detection code used for checking consistency of data, and
reads out, from the registers, the error information including the error detection code in each of the predetermined address areas, and stores the error information in the storage device.

8. The control device (100) according to any one of claims 1-7, wherein the circuit device(101) stores the error information in a non-volatile memory (103).

9. The control device (100) according to claim 4, wherein a history of the plurality of buffers is saved in the storage device.

10. The control device (100) according to any one of claims 1-9 wherein the circuit device (101) is a field programmable gate array (FPGA) or an application specific integrated circuit (ASIC).

11. A control method performed by a control device that includes a processor that executes software and a circuit device that detects abnormality carried out by a computer (102), the control method, comprising:
suppressing, performed by the circuit device, an abnormality notification to the software when detecting the abnormality; and
storing, performed by the circuit device, error information related to the abnormality in a storage device.
